# EUROPEAN PATENT SPECIFICATION

(11) **EP 4 393 567 B1**
(45) Date of publication and mention of the grant of the patent: **02.12.2026**
(21) Application number: 24175439.9
(22) Date of filing: 21.01.2020
(51) Int. Cl.: B01D 53/06, B01D 53/26, B01D 53/04

(54) **COMPRESSOR INSTALLATION AND METHOD FOR SUPPLYING COMPRESSED GAS**
INSTALLATION EINES KOMPRESSORS UND VERFAHREN ZUR VERSORGUNG MIT DRUCKGAS
INSTALLATION DE COMPRESSEUR ET PROCÉDÉ D'ALIMENTATION EN GAZ COMPRIMÉ

(30) Priority: 12.03.2019 BE 201905151
(43) Date of publication of application: 03.07.2024
(62) Document number(s) of the earlier application(s) in accordance with Art. 76 EPC: 20709316.2 / 3 938 080
(73) Proprietor: Atlas Copco Airpower, naamloze vennootschap, 2610 Wilrijk (BE)
(72) Inventor: VAN NEDERKASSEL, Frederik, 2610 Wilrijk (BE); BROUCKE, Stijn Johan E., 2610 Wilrijk (BE)
(74) Representative: Van Minnebruggen, Ewan Benito Agnes

(56) References cited:
- WO-A1-2011/017782
- WO-A1-2016/094968
- US-A- 5 309 725
- US-A1- 2018 154 302

## Description

The present invention relates to a compressor installation.

Compressor installations are already known which are provided with a compressor device, a compressed gas outlet pipe and a dryer connecting to said outlet pipe, which dryer is of the type which uses a desiccant to dry the compressed gas coming from the compressor device, whereby the dryer is provided with a drying section and a regeneration section.

The drying section is provided with a desiccant for drying the compressed gas which is guided through it and is provided with an entry which connects to said outlet pipe of the compressor device, and an exit which also serves as the compressor installation outlet for supplying compressed and dried gas to a downstream network to which compressed gas consumers can be connected.

When the compressed gas to be dried flows through the desiccant in the drying section, moisture from the compressed gas is taken up into the desiccant by adsorption or absorption.

In the regeneration section, as is known, desiccant is regenerated which has already been used for drying compressed gas and which is saturated or partially saturated with moisture extracted from the gas to be dried.

The desiccant in the regeneration section is hereby regenerated by means of a regeneration gas which is guided through it via an entry and an exit of said regeneration section.

For liquid-free compressor devices a so-called "heat of compression" dryer (HOC-dryer) can be used, whereby the regeneration gas is directly tapped off from said compressor device outlet pipe, for example at the compressor device outlet.

The tapped off regeneration gas has a sufficiently high temperature to be able to take up moisture from the desiccant to be regenerated.

A disadvantage of such known device is that the regeneration gas has a high absolute humidity and that after regeneration the desiccant still contains a certain amount of moisture, such that when it is used at a later stage to dry gas, it has a more limited capacity to take up moisture and therefore needs to be regenerated again sooner.

In addition, liquid-injected compressor devices do not lend themselves to the use of compression heat for regeneration, because the temperature at the compressor device outlet will typically be much lower here, such that the compressed gas would not be able to dry the desiccant to be regenerated, or not sufficiently.

Another disadvantage in liquid-injected compressor devices is that the compressed gas at the compressor device outlet contains a certain amount of liquid which can contaminate the desiccant.

A solution to avoid the contamination of the desiccant is to guide the entire flow of compressed gas coming from the compressor device to the drying section, after the compressed gas is first cooled and guided through a liquid separator.

Subsequently, regeneration gas can be tapped off at the drying section outlet, said regeneration gas being heated by means of a heat exchanger, for example using the heat of the compressed gas at the compressor device outlet or by using the heat of the injected liquid.

A problem that occurs in such approach is the fact that, for the operation of the compressor device and the lifetime of the liquid, the temperature of the liquid at the compressor device outlet must be kept as low as possible, preferably under 80°C, whereas, to be able to properly regenerate the desiccant, the temperature of the regeneration gas is preferably higher than 100°C and even more preferably higher than 120°C.

WO2016094968, WO2011017782 and US2018154302 disclose compressor installations with a drying device for compressed gas, with the drying device containing a drying zone and a regeneration zone

The purpose of the present invention is to provide a solution to one or more of the aforementioned and/or other disadvantages.

To this end the present invention relates to a compressor installation which is provided with a compressor device with at least one compressor element with a compressed gas outlet, a compressed gas outlet pipe connected to said compressor device, and a dryer connecting to said outlet pipe of the type which uses a desiccant for drying the compressed gas coming from the compressor device, whereby the dryer is provided with a drying section and a regeneration section with an entry and an exit for a regeneration gas, whereby a regeneration pipe is connected to the entry of the regeneration section, and whereby in said regeneration pipe a first heat exchanger is provided with a primary section through which the regeneration gas can be guided for heating the regeneration gas, characterised in that the compressor installation is further provided with a heat pipe with a first end which is in heat-transferring contact with a heat source in the form of a hotspot at a location in the compressor device where the temperature is higher than the temperature at the outlet of the compressor element and with a second end which is in heat-transferring contact with a secondary section of said first heat exchanger.

This provides the advantage that by using the so-called hotspot in the compressor device, there will be sufficient heat to sufficiently heat the regeneration gas such that the regeneration of the desiccant will be better than in the known devices. Typically, the temperature in such hotspot amounts to 120°C to 170°C.

Another advantage is that by means of the heat pipe, the heat is removed from the hotspots, which will contribute to increasing the compressor device's lifetime and efficiency.

Said hotspot is for example located in a drive of the compressor device, for example in the electric coils of an electric motor which is configured to drive said at least one compressor element. Such hotspots may also be present in or near any bearings of the compressor device.

The operation of a compressor installation according to the invention is similar to the known compressor installations provided with a dryer in which, for drying compressed gas, said compressed gas is guided through a drying section of the dryer.

Said dryer can be executed in different ways and can for example consist of one housing in which both the drying section and the regeneration section are located or can comprise two or more vessels, at least one of which forms a drying section and at least one the regeneration section.

The invention also relates to a method for supplying compressed gas coming from a compressor device with at least one compressor element with a compressed gas outlet, whereby the compressed gas is guided through a desiccant in a drying section for drying said compressed gas and whereby the desiccant is subsequently regenerated in a regeneration section by means of a regeneration gas which is guided through said regeneration section, characterised in that the method comprises the step of heating the regeneration gas before it is guided through said regeneration section, using the heat coming from a hotspot in said compressor device where the temperature is higher than the temperature at said outlet of said compressor element.

Preferably, a heat pipe is used to transport the heat from the hotspot to the regeneration gas.

An advantage of such method is that a sufficiently high temperature can be reached for the regeneration gas, such that all or practically all the moisture can be desorbed or extracted from the desiccant in the regeneration section.

Another advantage is that the heat is removed from the hotspots which will contribute to increasing the compressor device's lifetime and efficiency.

With the intention of better showing the characteristics of the invention, a few preferred variants of a compressor installation according to the invention as well as a method according to the invention, for supplying compressed gas are described hereinafter by way of an example without any limiting nature, with reference to the accompanying drawings, wherein:
figure 1 schematically shows a compressor installation according to the invention;
figure 2 shows an alternative embodiment of figure 1;
figures 3 and 4 show variants of figure 2.

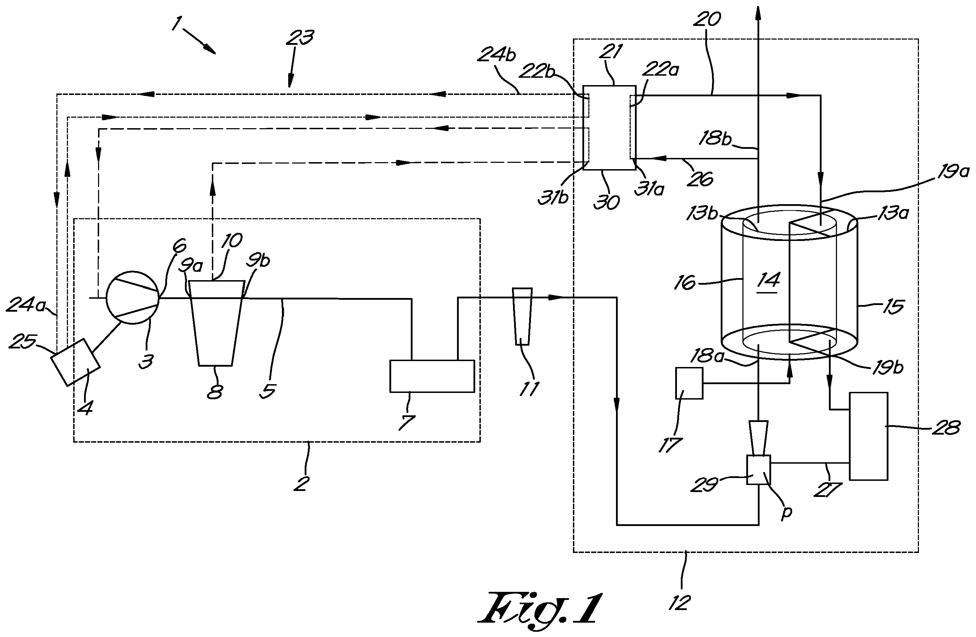

The compressor installation 1 according to the invention schematically shown in figure 1 comprises a compressor device 2 with in this case one compressor element 3 which is driven by a drive 4.

The drive 4 is for example an electric motor, but can also be another type of drive such as a thermal motor, a turbine wheel or the like.

It is not excluded that the compressor device 2 comprises more than one compressor element 3 and/or more than one drive 4.

In this case, but not necessarily, the compressor device 2 comprises an outlet pipe 5 which is connected to the outlet 6 of the compressor element 3.

An aftercooler 7 is included in said outlet pipe 5 for cooling the compressed air, however this is not necessary for the invention. Downstream from said aftercooler 7, a liquid separator can possibly be included in the outlet pipe 5.

As shown in figure 1, the compressor device 2 is an oil-injected compressor device 2, whereby oil is injected in the compressor element 3. According to the invention this is not strictly necessary, as the invention can also be applied with an oil-free compressor device.

In said outlet pipe 5, upstream from said aftercooler 7, an oil separator 8 is included with a compressed gas inlet 9a and outlet 9b and an outlet 10 for separated oil.

Downstream from the aftercooler 7, a filter 11 is also included in the outlet pipe.

The device 1 further comprises a dryer 12, which is provided with a so-called regeneration section 13a and a drying section 13b.

Both in the regeneration section 13a and in the drying section 13b a desiccant 14 has been added.

In the example shown, the dryer 12 is provided with a housing 15 within which the drying section 13b and the regeneration section 13a are located.

A drum 16 containing the desiccant 14 is mounted in the housing, said drum 16 being connected to driving means 17 such that the desiccant 14 can be moved successively through the drying section 13b and the regeneration section 13a.

The desiccant 14 in the drying section 13b will be used for drying the compressed gas which is guided through it and to this end the drying section 13b is in this case provided with an entry 18a which connects to said outlet pipe 5 of the compressor device 2, and with an exit 18b which serves as an outlet for supplying compressed and dried gas.

In this case the entire flow of compressed gas coming from said compressor element 3 is guided to the entry 18a of the drying section 13b.

According to the invention the regeneration section 13a is provided with an entry 19a and an exit 19b and a regeneration pipe 20 connected to the entry 19a to guide the regeneration gas through the regeneration section 13a to be able to regenerate moist desiccant 14 located in the regeneration section 13a.

A first heat exchanger 21 is provided in said regeneration pipe 20 for heating the regeneration gas with a primary section 22a through which the regeneration gas is guided, whereby the device 1 is further provided with a heat pipe 23 with a first end 24a which is in heat-transferring contact with a heat source in the form of a hotspot 25 at a location in the compressor device 2 where the temperature is higher than the temperature at the outlet 6 of the compressor element 3 and with a second end 24b which is in heat-transferring contact with the secondary section 22b of the first heat exchanger 21.

The heat pipe 23 is only schematically shown here.

Said hotspot 25 can be located in the drive 4, typically in the electric coils of the electric motor or in a bearing of the compressor device 2. The temperature at the hotspot 25 will amount to approximately 120°C to 170°C.

In the example shown, the regeneration pipe 20 is connected to the exit 18b of the drying section 13b via a tap off pipe 26 for tapping off regeneration gas at the exit 18b of the drying section 13b. In other words, part of the dried compressed gas is used as regeneration gas.

In this case the exit 19b of the regeneration section 13a is connected via a return pipe 27 to the outlet pipe 5 of the compressor device 2 at a point P near the entry 18a of the drying section 13b.

A cooler 28 is included in said return pipe 27 for cooling the regeneration gas after regenerating. It is not excluded that another liquid separator is included after the cooler 28 in the return pipe 27 for separating condensed liquid.

In this case the outlet pipe 5 is also connected with the return pipe 27 via a venturi 29.

Instead of a venturi ejector, a so-called blower or booster could also be used for the recombination of the used regeneration gas with gas to be dried.

In addition to said first heat exchanger 21, the device 1 in this case is also provided with a second heat exchanger 30 with a primary section 31a that is included in the regeneration pipe 20 and a secondary section 31b that is connected to the outlet 10 for separated oil of the oil separator 8.

The second heat exchanger 30, seen in the flow direction of the regeneration gas, is installed upstream from the first heat exchanger 21.

Indeed, the temperature of the separated oil is lower than the temperature of the hotspot 25. After heating with the second heat exchanger 30, the regeneration gas will be further heated to a higher temperature using the first heat exchanger 21.

In this case the primary sections 22a and 31a of the first and second heat exchanger 21 and 30 are combined to form a whole.

The operation of the device 1 is very simple and as follows.

The compressor element 3 will compress gas, for example air, in the known way.

During the operation, oil will be injected in the compressor element 3 for the lubrication, cooling and sealing thereof.

Typically, the temperature of the gas and the oil at the outlet 6 of the compressor element 3 will be around 80°C.

The compressed gas will pass via the outlet pipe 5 along the oil separator 8 for separating the injected oil from the compressed gas.

The gas subsequently passes through the aftercooler 7, whereby the compressed gas will cool to approximately 30°C and through the filter 11 for filtering out any last impurities.

The outlet pipe 5 will guide all the cooled and purified compressed gas to the entry 18a of the drying section 13b of the dryer 12.

As the gas passes through the drying section 13b, the desiccant 14 will take up moisture from the gas. In other words, the desiccant 14 will become moist.

When the gas that is now dry leaves the drying section 13b, it will for example be transported to a network of consumers of compressed gas.

A part of said dry gas will be guided to the regeneration pipe 20 via the tap off pipe 26.

This so-called regeneration gas will hereby pass via the second and then the first heat exchanger 30, 21 to heat the regeneration gas.

Via the second heat exchanger 30, the regeneration gas will be heated using the separated oil.

Via the first heat exchanger 21, the regeneration gas will be heated using the heat pipe 23. The heat pipe 23 will hereby extract heat at the hotspot 25 in the drive 4.

The two aforementioned heat exchangers 21, 30 will heat the regeneration gas from approximately 30°C to approximately 120°C.

Via the regeneration pipe 20, the gas is guided to the inlet 19a of the regeneration zone 13a where it flows through the moist desiccant 14 in the regeneration zone 13a.

The regeneration gas will regenerate the desiccant 14, this means: extract moisture from the moist desiccant 14 or in other words dry the desiccant 14 itself.

Subsequently, the dried desiccant 14 will be moved to the drying section 13b by means of the driving means 17 of the drum 16, while moist desiccant 14 ends up in the regeneration section 13a at the same time.

The regeneration gas which after passage through the regeneration section 13a contains moisture and has a temperature of approximately 75°C, will be transported via the return pipe 27 to the entry 18a of the drying section 13b and thus dried. It will hereby pass via the cooler 28 and be cooled to approximately 30°C before it is recombined via the venturi 29 with the compressed gas coming from the compressor device 2.

In the example described above and shown in the figures, heat is extracted from the oil via the second heat exchanger 30 and transferred to the regeneration gas.

It is also possible that, additionally or alternatively to said second heat exchanger 30, said aftercooler 7 in the outlet pipe 5 forms the secondary section of a third heat exchanger, the primary section of which is included in the regeneration pipe 20.

The heat of the compressed gas can thus be used for heating the regeneration gas.

Analogue to said primary section of the first and second heat exchanger, the primary sections of the first and third heat exchanger can be combined to form a whole.

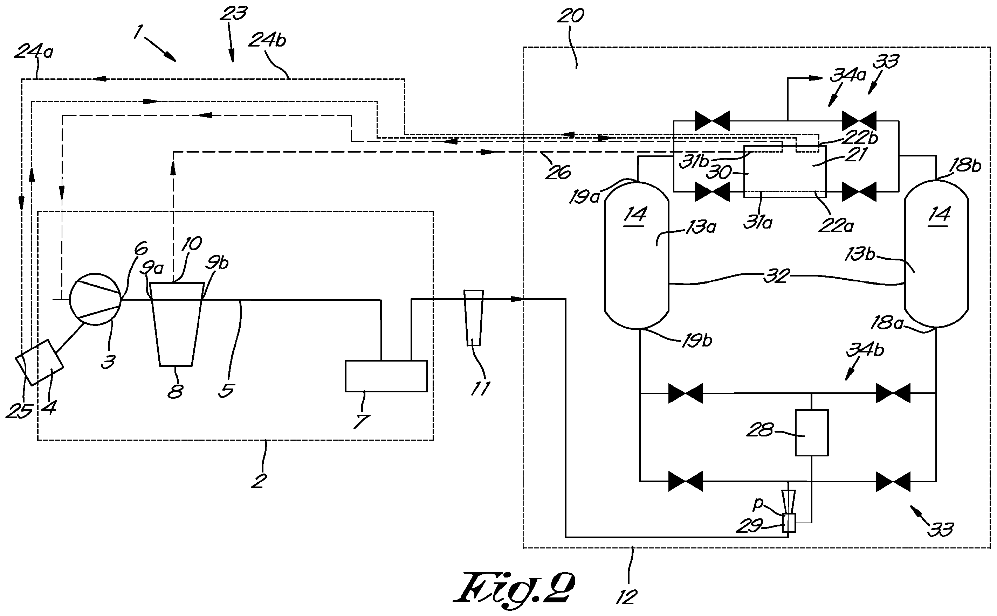

Figure 2 shows a variant according to figure 1, whereby in this case the dryer 12 is made differently.

Instead of a rotating or revolving drum 16, the dryer 12 now comprises a number of vessels 32 that are filled with the desiccant 14.

In the example shown there are two vessels 32, but it can also be three, four or more vessels, at least one vessel of which forms the drying section 13b and at least one vessel forms the regeneration section 13a.

In addition to said vessels 32, the dryer further comprises a valve system 33 which connects the outlet pipe 5, the regeneration pipe 20 and in this case also the return pipe 27 and the tap off pipe 26 to said vessels 32.

Said valve system 33 comprises two separate blocks 34a, 34b.

Said valve system 33 is a system of various pipes and valves that can be adjusted such that at least one vessel 32 is always regenerated, while the other vessels 32 dry the compressed gas, whereby in this case by adjusting the valve system 33 the vessels 32 are successively regenerated in turn.

The cooler 28, the venturi 29, and at least a section of the return pipe 27 and the tap off pipe 26 are integrated in the valve system 33, but this is not necessary for the invention.

For the rest the operation is analogue to the operation of the device 1 in figure 1 described above.

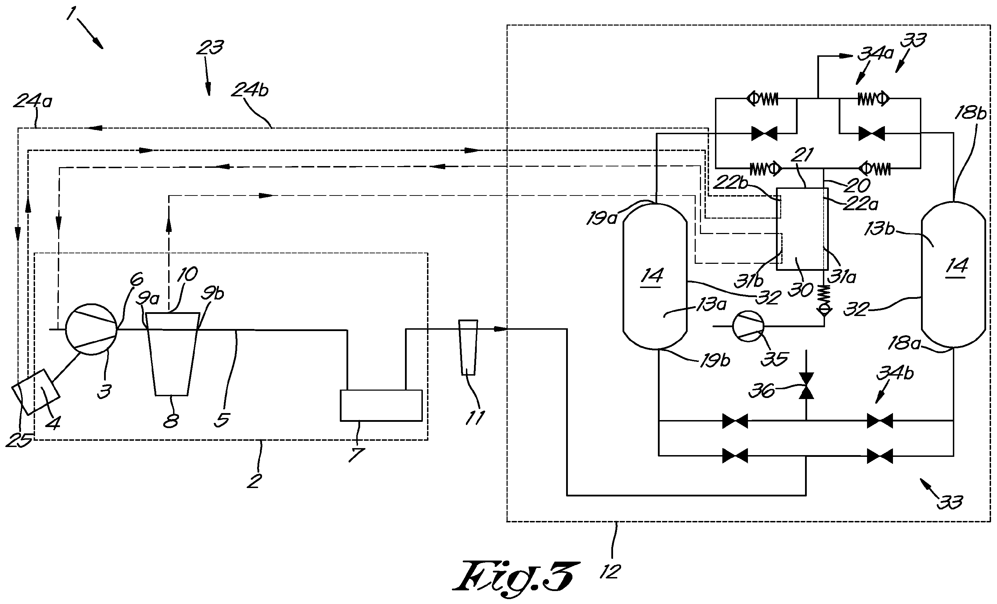

Figure 3 shows a variant of figure 2, whereby in this case the regeneration gas is not tapped off from the dried, compressed gas, but comes from an external source 35.

The regeneration gas is no longer brought to the inlet 18a of the drying section 13b via a return pipe 27 either, but after regeneration of the desiccant will be removed or blown off, for example by means of a blow-off valve 36.

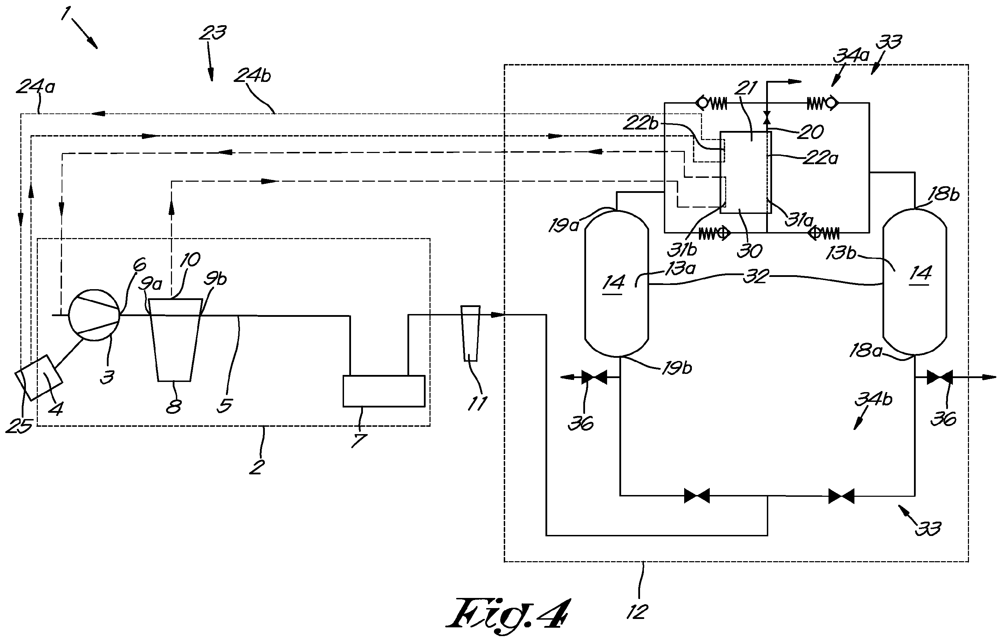

Figure 4 shows another embodiment, whereby in this case the regeneration gas is tapped off again at the outlet 18b of the drying section 13b, as shown in figure 2, but whereby the regeneration gas after regeneration is blown off, for example by means of a blow-off valve 36, as shown in figure 3.

For the rest the embodiments of figures 3 and 4 are identical to figure 2.

Although in all previously shown and described embodiments, there was always only one heat pipe 23, it is not excluded that the device 1 is provided with several heat pipes 23 which with their second end 24b are in heat-transferring contact with the secondary section 22b of said first heat exchanger 21. Furthermore, these multiple heat pipes 23 can be in heat-transferring contact with their first end 24a with various heat sources in the form of hotspots 25 at various locations in the compressor device 2.

It may be clear that the specific execution of the valve system 33 in figures 2 to 4 is not restrictive for the invention and that it can be realised in many different ways.

The present invention is by no means limited to the embodiments described as an example and shown in the drawings, but a compressor installation according to the invention as well as a method according to the invention for supplying compressed gas can be realised in all kinds of forms and dimensions, without departing from the scope of the claims.

## Claims

1. Compressor installation provided with a compressor device (2) with at least one compressor element (3) with a compressed gas outlet (6), a compressed gas outlet pipe (5) connected to said compressor device (2), and a dryer (12) connecting to said outlet pipe of the type which uses a desiccant for drying the compressed gas coming from the compressor device (2), whereby the dryer (12) is provided with a drying section (13b) and a regeneration section (13a) with an entry (19a) and an exit (19b) for a regeneration gas, whereby a regeneration pipe (20) is connected to the entry (19a) of the regeneration section (13a), and whereby in said regeneration pipe (20) a first heat exchanger (21) is provided for heating the regeneration gas with a primary section (22a), **characterised in that** the compressor installation (1) is further provided with a heat pipe (23) with a first end (24a) which is in heat-transferring contact with a heat source in the form of a hotspot (25) at a location in the compressor device (2) where the temperature is higher than the temperature at the outlet (6) of the compressor element (3) and with a second end (24b) which is in heat-transferring contact with a secondary section (22b) of said first heat exchanger (21), whereby the heat pipe (23) is part of a closed loop heat-transfer circuit that is separate from and unconnected to the compressed gas outlet (6) and compressed gas outlet pipe (5).

2. Compressor installation according to claim 1, **characterised in that** an aforementioned hotspot (25) is located in a drive (4) of the compressor device (2).

3. Compressor installation according to claim 1 or 2, **characterised in that** an aforementioned hotspot (25) is located in a bearing of the compressor device (2).

4. Compressor installation according to any one of the previous claims, **characterised in that** the compressor installation (1) is configured such that the entire flow of compressed gas coming from said compressor element (3) is transported to an entry (18a) of said drying section (13b).

5. Compressor installation according to any one of the previous claims, **characterised in that** a tap off pipe (26) is provided at an exit (18b) of the drying section (13b) which connects to said regeneration pipe (20) for tapping off regeneration gas at the exit (18b) of the drying section (13b).

6. Compressor installation according to any one of the previous claims, **characterised in that** the exit (19b) of the regeneration section (13a) is connected via a return pipe (27) to the outlet pipe (5) of the compressor device (2) at a point (P) near the entry (18a) of the drying section (13b).

7. Compressor installation according to claim 6, **characterised in that** in said return pipe (27) a cooler (28) is included and possibly a liquid separator.

8. Compressor installation according to claim 6 or 7, **characterised in that** the return pipe (27) is connected to the outlet pipe (5) via a venturi (29).

9. Compressor installation according to any one of the previous claims, **characterised in that** the compressor device (2) is an oil-injected compressor device (2), whereby oil is injected in the compressor element (3).

10. Compressor installation according to claim 9, **characterised in that** an oil separator (8) is included in said outlet pipe (5), comprising a compressed gas inlet (9a) and outlet (9b) and an outlet (10) for separated oil.

11. Compressor installation according to claim 10, **characterised in that** the outlet (10) for separated oil is connected to the secondary section (31b) of a second heat exchanger (30) for guiding the separated oil to the secondary section (31b) of the second heat exchanger (30).

12. Compressor installation according to claim 11, **characterised in that** the primary section (31a) of the second heat exchanger (30) is included in the regeneration pipe (20).

13. Compressor installation according to claim 12, **characterised in that** the primary sections (22a, 31a) of said first and second heat exchanger (21, 30) are combined to form a whole.

14. Compressor installation according to any one of the previous claims, **characterised in that** the dryer (12) is provided with a housing (15) within which the drying section (13b) and the regeneration section (13a) are located, whereby in the housing (15) a drum (16) is mounted containing the desiccant (14), said drum (16) being connected with driving means (17) such that the desiccant (14) can successively move through the drying section (13b) and the regeneration section (13a).

15. Compressor installation according to any one of the previous claims 1 to 13, **characterised in that** the dryer (12) comprises a number of vessels (32) containing the desiccant (14), at least one vessel (32) of which forms the drying section (13b) and at least one vessel (32) forms the regeneration section (13a), and **in that** the dryer (12) further comprises a valve system (33) which connects the outlet pipe (5), the regeneration pipe (20) and possibly the return pipe (27) and the tap off pipe (26) to said vessels (32), whereby said valve system (33) is configured such that at least one vessel (32) is always regenerated, while the other vessels (32) dry the compressed gas.

16. Compressor installation according to any one of the previous claims, **characterised in that** an aftercooler (7) and possibly a liquid separator is included in the outlet pipe (5), and **in that** said aftercooler (7) forms the secondary section of a third heat exchanger, the primary section of which is included in the regeneration pipe (5).

17. Method for supplying compressed gas coming from a compressor device (2) with at least one compressor element (3) with a compressed gas outlet (6), a compressed gas outlet pipe (5) connected to said compressor device (2), and a dryer (12) connecting to said outlet pipe (5), whereby the dryer (12) is provided with a drying section (13b) and a regeneration section (13a), whereby the compressed gas is guided through a desiccant (14) in the drying section (13b) for drying said compressed gas and whereby the desiccant(14) is subsequently regenerated in a regeneration section (13a) by means of a regeneration gas that is guided through **said regeneration** section (13a), **characterised in that** the method comprises the steps of
a) transfering heat from a hotspot (25) to a heat pipe (23) which is part of a closed loop heat-transfer circuit between said hotspot and a first heat exchanger (21), whereby the closed loop heat-transfer circuit is separate from and unconnected to the compressed gas outlet (6) and compressed gas outlet pipe (5), whereby said hotspot (25) is located in said compressor device (2) where the temperature is higher than the temperature at said outlet (6) of said compressor element (3),
b) heating the regeneration gas using said heat from said closed loop heat-transfer circuit in said first heat exchanger (21) before guiding the regeneration gas through said regeneration section (13a) .

## Patentansprüche

1. Kompressorinstallation, die mit einer Kompressorvorrichtung (2) mit mindestens einem Kompressorelement (3) mit einem Druckgasauslass (6), einem Druckgasauslassrohr (5), das mit der Kompressorvorrichtung (2) verbunden ist, und einem Trockner (12), der mit dem Auslassrohr verbunden ist, von der Art, die ein Trocknungsmittel zum Trocknen des aus der Kompressorvorrichtung (2) kommenden Druckgases verwendet, bereitgestellt ist, wobei der Trockner (12) mit einem Trocknungsabschnitt (13b) und einem Regenerationsabschnitt (13a) mit einem Eingang (19a) und einem Ausgang (19b) für ein Regenerationsgas bereitgestellt ist, wobei ein Regenerationsrohr (20) mit dem Eingang (19a) des Regenerationsabschnitts (13a) verbunden ist und wobei in dem Regenerationsrohr (20) ein erster Wärmetauscher (21) zum Erwärmen des Regenerationsgases mit einem Primärabschnitt (22a) bereitgestellt ist, **dadurch gekennzeichnet, dass** die Kompressorinstallation (1) weiter mit einem Wärmerohr (23) mit einem ersten Ende (24a), das in wärmeübertragendem Kontakt mit einer Wärmequelle in Form eines heißen Punkts (25) an einer Stelle in der Kompressorvorrichtung (2) steht, an der die Temperatur höher als die Temperatur an dem Auslass (6) des Kompressorelements (3) ist, und mit einem zweiten Ende (24b), das in wärmeübertragendem Kontakt mit einem Sekundärabschnitt (22b) des ersten Wärmetauschers (21) steht, bereitgestellt ist, wobei das Wärmerohr (23) Teil eines geschlossenen Wärmeübertragungskreislaufs ist, der von dem Druckgasauslass (6) und dem Druckgasauslassrohr (5) getrennt und nicht mit diesen verbunden ist.

2. Kompressorinstallation nach Anspruch 1, **dadurch gekennzeichnet, dass** sich ein vorstehend genannter heißer Punkt (25) in einem Antrieb (4) der Kompressorvorrichtung (2) befindet.

3. Kompressorinstallation nach Anspruch 1 oder 2, **dadurch gekennzeichnet, dass** sich ein vorstehend genannter heißer Punkt (25) in einem Lager der Kompressorvorrichtung (2) befindet.

4. Kompressorinstallation nach einem der vorstehenden Ansprüche, **dadurch gekennzeichnet, dass** die Kompressorinstallation (1) derart ausgebildet ist, dass der gesamte aus dem Kompressorelement (3) kommende Druckgasstrom zu einem Eingang (18a) des Trocknungsabschnitts (13b) transportiert wird.

5. Kompressorinstallation nach einem der vorstehenden Ansprüche, **dadurch gekennzeichnet, dass** an einem Ausgang (18b) des Trocknungsabschnitts (13b) ein Abzweigrohr (26) bereitgestellt ist, das mit dem Regenerationsrohr (20) zum Abzweigen von Regenerationsgas an dem Ausgang (18b) des Trocknungsabschnitts (13b) verbunden ist.

6. Kompressorinstallation nach einem der vorstehenden Ansprüche, **dadurch gekennzeichnet, dass** der Ausgang (19b) des Regenerationsabschnitts (13a) über ein Rücklaufrohr (27) mit dem Auslassrohr (5) der Kompressorvorrichtung (2) an einem Punkt (P) in der Nähe des Eingangs (18a) des Trocknungsabschnitts (13b) verbunden ist.

7. Kompressorinstallation nach Anspruch 6, **dadurch gekennzeichnet, dass** in dem Rücklaufrohr (27) ein Kühler (28) und möglicherweise ein Flüssigkeitsabscheider eingeschlossen ist.

8. Kompressorinstallation nach Anspruch 6 oder 7, **dadurch gekennzeichnet, dass** das Rücklaufrohr (27) über ein Venturi (29) mit dem Auslassrohr (5) verbunden ist.

9. Kompressorinstallation nach einem der vorstehenden Ansprüche, **dadurch gekennzeichnet, dass** die Kompressorvorrichtung (2) eine öleingespritzte Kompressorvorrichtung (2) ist, wobei Öl in das Kompressorelement (3) eingespritzt wird.

10. Kompressorinstallation nach Anspruch 9, **dadurch gekennzeichnet, dass** ein Ölabscheider (8) in dem Auslassrohr (5) eingeschlossen ist, der einen Druckgaseinlass (9a) und -auslass (9b) und einen Auslass (10) für abgeschiedenes Öl umfasst.

11. Kompressorinstallation nach Anspruch 10, **dadurch gekennzeichnet, dass** der Auslass (10) für abgeschiedenes Öl mit dem Sekundärabschnitt (31b) eines zweiten Wärmetauschers (30) zum Leiten des abgeschiedenen Öls zu dem Sekundärabschnitt (31b) des zweiten Wärmetauschers (30) verbunden ist.

12. Kompressorinstallation nach Anspruch 11, **dadurch gekennzeichnet, dass** der Primärabschnitt (31a) des zweiten Wärmetauschers (30) in dem Regenerationsrohr (20) eingeschlossen ist.

13. Kompressorinstallation nach Anspruch 12, **dadurch gekennzeichnet, dass** die Primärabschnitte (22a, 31a) des ersten und zweiten Wärmetauschers (21, 30) zusammengefasst sind, um ein Ganzes zu bilden.

14. Kompressorinstallation nach einem der vorstehenden Ansprüche, **dadurch gekennzeichnet, dass** der Trockner (12) mit einem Gehäuse (15) bereitgestellt ist, in dem sich der Trocknungsabschnitt (13b) und der Regenerationsabschnitt (13a) befinden, wobei in dem Gehäuse (15) eine Trommel (16) montiert ist, die das Trocknungsmittel (14) enthält, wobei die Trommel (16) mit Antriebsmitteln (17) derart verbunden ist, dass sich das Trocknungsmittel (14) nacheinander durch den Trocknungsabschnitt (13b) und den Regenerationsabschnitt (13a) bewegen kann.

15. Kompressorinstallation nach einem der vorstehenden Ansprüche 1 bis 13, **dadurch gekennzeichnet, dass** der Trockner (12) eine Anzahl von Behältern (32) umfasst, die das Trocknungsmittel (14) enthält, von der mindestens ein Behälter (32) den Trocknungsabschnitt (13b) bildet und mindestens ein Behälter (32) den Regenerationsabschnitt (13a) bildet, und dass der Trockner (12) weiter ein Ventilsystem (33) umfasst, das das Auslassrohr (5), das Regenerationsrohr (20) und möglicherweise das Rücklaufrohr (27) und das Abzweigrohr (26) mit den Behältern (32) verbindet, wobei das Ventilsystem (33) derart ausgebildet ist, dass mindestens ein Behälter (32) immer regeneriert wird, während die anderen Behälter (32) das komprimierte Gas trocknen.

16. Kompressorinstallation nach einem der vorstehenden Ansprüche, **dadurch gekennzeichnet, dass** ein Nachkühler (7) und möglicherweise ein Flüssigkeitsabscheider in dem Auslassrohr (5) eingeschlossen ist und dass der Nachkühler (7) den Sekundärabschnitt eines dritten Wärmetauschers bildet, dessen Primärabschnitt in dem Regenerationsrohr (5) eingeschlossen ist.

17. Verfahren zur Versorgung mit Druckgas, das aus einer Kompressorvorrichtung (2) mit mindestens einem Kompressorelement (3) kommt, mit einem Druckgasauslass (6), einem Druckgasauslassrohr (5), das mit der Kompressorvorrichtung (2) verbunden ist, und einem Trockner (12), der mit dem Auslassrohr (5) verbunden ist, wobei der Trockner (12) mit einem Trocknungsabschnitt (13b) und einem Regenerationsabschnitt (13a) bereitgestellt ist, wobei das Druckgas durch ein Trocknungsmittel (14) in dem Trocknungsabschnitt (13b) zum Trocknen des Druckgases hindurch geleitet wird und wobei das Trocknungsmittel (14) anschließend in einem Regenerationsabschnitt (13a) mittels eines Regenerationsgases, das durch den Regenerationsabschnitt (13a) geleitet wird, regeneriert wird, **dadurch gekennzeichnet, dass** das Verfahren die Schritte umfasst von
a) Übertragen von Wärme von einem heißen Punkt (25) auf ein Wärmerohr (23), das Teil eines geschlossenen Wärmeübertragungskreislaufs zwischen dem heißen Punkt und einem ersten Wärmetauscher (21) ist, wobei der geschlossene Wärmeübertragungskreislauf von dem Druckgasauslass (6) und dem Druckgasauslassrohr (5) getrennt und nicht mit diesen verbunden ist, wobei sich der heiße Punkt (25) dort in der Kompressorvorrichtung (2) befindet, wo die Temperatur höher ist als die Temperatur an dem Auslass (6) des Kompressorelements (3),
b) Erwärmen des Regenerationsgases unter Verwendung des geschlossenen Wärmeübertragungskreislaufs in dem ersten Wärmetauscher (21) bevor das Regenerationsgas durch den Regenerationsabschnitt (13a) geleitet wird.

## Revendications

1. Installation de compression munie d'un dispositif de compression (2) comportant au moins un élément de compression (3) présentant une sortie de gaz comprimé (6), une conduite de sortie de gaz comprimé (5) raccordée audit dispositif de compression (2), et un sécheur (12) raccordé à ladite conduite de sortie, du type qui utilise un desséchant pour sécher le gaz comprimé provenant du dispositif de compression (2), le sécheur (12) étant doté d'une section de séchage (13b) et d'une section de régénération (13a) comportant une entrée (19a) et une sortie (19b) pour un gaz de régénération, une conduite de régénération (20) étant raccordée à l'entrée (19a) de la section de régénération (13a), et un premier échangeur de chaleur (21) comportant une section primaire (22a) étant disposé dans ladite conduite de régénération (20) pour chauffer le gaz de régénération, **caractérisée en ce que** l'installation de compression (1) est en outre munie d'un caloduc (23) présentant une première extrémité (24a) qui est en contact de transfert thermique avec une source de chaleur sous la forme d'un point chaud (25) à un emplacement dans le dispositif de compression (2) où la température est supérieure à la température à la sortie (6) de l'élément de compression (3) et présentant une seconde extrémité (24b) qui est en contact de transfert thermique avec une section secondaire (22b) dudit premier échangeur de chaleur (21), le caloduc (23) faisant partie d'un circuit de transfert thermique en boucle fermée qui est séparé de la sortie de gaz comprimé (6) et de la conduite de sortie de gaz comprimé (5) et non relié à celles-ci.

2. Installation de compression selon la revendication 1, **caractérisée en ce qu'**un point chaud (25) précité est situé dans un entraînement (4) du dispositif de compression (2).

3. Installation de compression selon la revendication 1 ou 2, **caractérisée en ce qu'**un point chaud (25) précité est situé dans un palier du dispositif de compression (2).

4. Installation de compression selon l'une quelconque des revendications précédentes, **caractérisée en ce que** l'installation de compression (1) est configurée de façon telle que l'intégralité du flux de gaz comprimé provenant dudit élément de compression (3) est acheminée vers une entrée (18a) de ladite section de séchage (13b).

5. Installation de compression selon l'une quelconque des revendications précédentes, **caractérisée en ce qu'**une conduite de prélèvement (26) est disposée à une sortie (18b) de la section de séchage (13b) qui se raccorde à ladite conduite de régénération (20) pour le prélèvement de gaz de régénération à la sortie (18b) de la section de séchage (13b).

6. Installation de compression selon l'une quelconque des revendications précédentes, **caractérisée en ce que** la sortie (19b) de la section de régénération (13a) est raccordée par l'intermédiaire d'une conduite de retour (27) à la conduite de sortie (5) du dispositif de compression (2) en un point (P) à proximité de l'entrée (18a) de la section de séchage (13b).

7. Installation de compression selon la revendication 6, **caractérisée en ce que** dans ladite conduite de retour (27) est/sont intégré(s) un refroidisseur (28) et éventuellement un séparateur de liquide.

8. Installation de compression selon la revendication 6 ou 7, **caractérisée en ce que** la conduite de retour (27) est raccordée à la conduite de sortie (5) par l'intermédiaire d'un venturi (29).

9. Installation de compression selon l'une quelconque des revendications précédentes, **caractérisée en ce que** le dispositif de compression (2) est un dispositif de compression à injection d'huile (2), de l'huile étant injectée dans l'élément de compression (3).

10. Installation de compression selon la revendication 9, **caractérisée en ce qu'**un séparateur d'huile (8), comprenant une entrée (9a) et une sortie (9b) de gaz comprimé et une sortie (10) pour l'huile séparée, est intégré dans ladite conduite de sortie (5).

11. Installation de compression selon la revendication 10, **caractérisée en ce que** la sortie (10) pour l'huile séparée est raccordée à la section secondaire (31b) d'un deuxième échangeur de chaleur (30) pour acheminer l'huile séparée vers la section secondaire (31b) du deuxième échangeur de chaleur (30).

12. Installation de compression selon la revendication 11, **caractérisée en ce que** la section primaire (31a) du deuxième échangeur de chaleur (30) est intégrée dans la conduite de régénération (20).

13. Installation de compression selon la revendication 12, **caractérisée en ce que** les sections primaires (22a, 31a) desdits premier et deuxième échangeurs de chaleur (21, 30) sont combinées pour former un ensemble.

14. Installation de compression selon l'une quelconque des revendications précédentes, **caractérisée en ce que** le sécheur (12) est muni d'une enceinte (15) à l'intérieur de laquelle se trouvent la section de séchage (13b) et la section de régénération (13a), un tambour (16) contenant le desséchant (14) étant monté dans l'enceinte (15), ledit tambour (16) étant relié à un moyen d'entraînement (17) de sorte que le desséchant (14) peut se déplacer successivement à travers la section de séchage (13b) et la section de régénération (13a).

15. Installation de compression selon l'une quelconque des revendications 1 à 13 précédentes, **caractérisée en ce que** le sécheur (12) comprend un certain nombre de récipients (32) contenant le desséchant (14), dont au moins un récipient (32) constitue la section de séchage (13b) et au moins un récipient (32) constitue la section de régénération (13a), et **en ce que** le sécheur (12) comprend en outre un système de vannes (33) qui relie la conduite de sortie (5), la conduite de régénération (20) et éventuellement la conduite de retour (27) et la conduite de prélèvement (26) auxdits récipients (32), ledit système de vannes (33) étant configuré de manière qu'au moins un récipient (32) soit toujours en cours de régénération, tandis que les autres récipients (32) sèchent le gaz comprimé.

16. Installation de compression selon l'une quelconque des revendications précédentes, **caractérisée en ce qu'**un post-refroidisseur (7) et éventuellement un séparateur de liquide est/sont intégrés dans la conduite de sortie (5), et **en ce que** ledit post-refroidisseur (7) constitue la section secondaire d'un troisième échangeur de chaleur, dont la section primaire est intégrée dans la conduite de régénération (5).

17. Procédé d'alimentation en gaz comprimé provenant d'un dispositif de compression (2) comportant au moins un élément de compression (3) présentant une sortie de gaz comprimé (6), une conduite de sortie de gaz comprimé (5) raccordée audit dispositif de compression (2), et un sécheur (12) raccordé à ladite conduite de sortie (5), le sécheur (12) étant doté d'une section de séchage (13b) et d'une section de régénération (13a), le gaz comprimé étant acheminé à travers un desséchant (14) dans la section de séchage (13b) pour le séchage dudit gaz comprimé et le desséchant (14) étant ensuite régénéré dans une section de régénération (13a) au moyen d'un gaz de régénération qui est acheminé à travers ladite section de régénération (13a), **caractérisé en ce que** le procédé comprend les étapes consistant à :
a) transférer de la chaleur depuis un point chaud (25) vers un caloduc (23) qui fait partie d'un circuit de transfert thermique en boucle fermée entre ledit point chaud et un premier échangeur de chaleur (21), le circuit de transfert thermique en boucle fermée étant séparé de la sortie de gaz comprimé (6) et de la conduite de sortie de gaz comprimé (5) et n'étant pas relié à celles-ci, ledit point chaud (25) étant situé dans ledit dispositif de compression (2) à un emplacement où la température est supérieure à la température à ladite sortie (6) dudit élément de compression (3),
b) chauffer le gaz de régénération à l'aide de ladite chaleur provenant dudit circuit de transfert thermique en boucle fermée dans ledit premier échangeur de chaleur (21) avant de faire passer le gaz de régénération à travers ladite section de régénération (13a).
